# EUROPEAN PATENT SPECIFICATION

(11) **EP 1 542 307 B1**
(45) Date of publication and mention of the grant of the patent: **09.05.2012**
(21) Application number: 04021930.5
(22) Date of filing: 15.09.2004
(51) Int. Cl.: B60L 11/18, H01M 10/0525, H01M 10/42

(54) **Battery pack and electric vehicle**
Batterieblock und Elektrofahrzeug
Bloc de batteries et véhicule éléctrique

(30) Priority: 29.09.2003 JP 2003336808
(43) Date of publication of application: 15.06.2005
(73) Proprietor: SHIN-KOBE ELECTRIC MACHINERY CO. LTD, Tokyo 104-0044 (JP)
(72) Inventor: Nakai, Kenji, Fukaya-shi, Saitama 366-0035 (JP)
(74) Representative: Viering, Jentschura & Partner

(56) References cited:
- EP-A2- 1 241 727
- JP-A- 2002 110 250
- US-A1- 2002 081 485

## Description

### FIELD OF THE INVENTION

The present invention relates to a battery pack and an electric vehicle, and in particular relates to a battery pack in which a plurality of lithium secondary batteries where a negative electrode lithium amount capable of being occluded by a negative electrode that a carbon material is used for a negative electrode active material is larger than a positive electrode lithium amount capable of being discharged by a positive electrode that a lithium transition metal complex oxide is used for a positive electrode active material are connected in series, and an electric vehicle on which a battery pack thereof is mounted.

### DESCRIPTON OF THE RELATED ART

In an automobile industry, development of a pure electric vehicle (PEV) which does not discharge exhaust gas and of which power source is purely confined to batteries, and a hybrid electric vehicle (HEV) of which power source is suppliedboth from an internal combustion engine and batteries has been accelerated, and some of the PEVs and the HEVs have reached a practical stage.

Batteries provided for the power source of the electric vehicles are requested to have high output and high energy characteristics as a matter of course. In order to satisfy such a request, large sized lithium secondary batteries are used as the power source for the electric vehicles. In general, a lithium transition metal complex oxide is used for a positive electrode active material and a carbon material capable of occluding and discharging lithium ions is used for a negative electrode active material in the lithium secondary battery. The positive and negative electrodes are constituted in a strip-shapedmanner that the positive and negative electrode active materials, together with a conductive material and a binder if necessary, are coated on metal foils respectively, and thin and film shaped separators made of a polyolephine systemmaterial are interposed therebetween for separating the positive and negative electrodes electrically. Further, in order to secure a high output, the battery has an electrode group in which the positive and negative electrodes having a large area are wound cylindrically via the separators or inwhich the positive and negative electrodes are layered via the separators for increasing an electrode reaction area.

It is possible to enhance output and energy characteristics by making the lithium secondary battery large. However, since there are limits to making the battery large from various viewpoints, a battery pack in which a plurality of lithium secondary batteries are connected in parallel and/or series is actually being used. When such battery packs are mounted on the electric vehicle, a module battery in which a plurality of the battery packs is connected is generally used in order to simplify electric connection.

On the other hand, the lithium secondary battery is also requested to have high credibility on a long use. For example, JPB-2734822 discloses a lithium secondary battery having a structure that a lithium mount capable of being occluded by a negative electrode is made larger than a sum of lithiumamounts capable of being discharged by a positive electrode and a non-aqueous electrolyte in order to realize a long life for a lithium secondary battery.

In the above disclosed lithium secondary battery, since the lithium discharged at a time of battery charging is entirely occluded by the negative electrode, the lithium does not deposit on the negative electrode even in an overcharged state. This prevents occurrence of micro short-cuts, however, may cause deterioration of the active material in the overcharged state. Further, since a plurality of batteries are charged and discharged in a state of serial connection in the battery pack, when there is a difference in a state of charge (SOC) among the batteries, a part of the batteries tends to become an overcharged state and/or an over-discharged state. Thus, the part of the batteries causes the deterioration of the active materials, and the deterioration is accelerated by repetition in charging and discharging of the batteries. Accordingly, this lowers capacity and output of the part of the batteries and shortens a life of the battery pack as a whole. Furthermore, in the electric vehicle on which a plurality of the battery packs are connected and mounted, the vehicle is requested to have reliance on driving force and a travel distance by preventing performance deterioration of all of the mounted batteries.

### SUMMARY OF THE INVENTION

In view of the above circumstances, an object of the present invention is to provide a battery pack which can prevent performance deterioration and which has a long life, and an electric vehicle which can prevent lowering of driving force and a travel distance by mounting the battery pack(s).

In order to achieve the above object, a first aspect of the present invention is directed to a battery pack according to claim 1 in which a plurality of lithium secondary batteries, where a negative electrode lithium amount capable of being occluded by a negative electrode that a carbon material is used for a negative electrode active material is larger than a positive electrode lithium amount capable of being discharged by a positive electrode that a lithium transition metal complex oxide is used for a positive electrode active material, are connected in series, wherein a difference in a state of charge (SOC) of each of the lithium secondary batteries is not greater than a percentage of a difference between a positive electrode charging capacity defined as a capacity of the positive electrode lithium amount in the positive electrode and a negative electrode charging capacity defined as a capacity of the negative electrode lithium amount in the negative electrode to a capacity of the lithium secondary battery.

In a case that a battery pack having differences in the SOC of each of batteries is charged, when low SOC lithium secondary batteries are charged up to a full charged state, high SOC lithium secondary batteries are overcharged so that a lithium amount of the negative electrode becomes excessive. The negative electrode active material deteriorates because the lithium amount exceeds the charging capacity of the negative electrode in the overcharged state, and at the same time, the capacity and output of the batteries lower because the negative electrode can not occlude lithium any more and micro shortcuts occur with deposition of lithium. Since the deterioration of the active material is accelerated by repetition in charging and discharging of batteries, not only a life of the lithium secondary batteries is shortened but that of the battery pack is. The first aspect of the present invention is expressed by the following inequality: (difference in SOC) < = {absolute value of (positive electrode charging capacity-negative electrode charging capacity) / (capacity of lithium secondary battery)} x 100. According to the first aspect, since the difference in the SOC of each of the batteries is set to be not greater than a percentage of {absolute value of (positive electrode charging capacity - negative electrode charging capacity) / (capacity of lithium secondary battery)}, excessive lithium is occluded by the negative electrode in high SOC lithium secondary batteries even if low SOC lithium secondary batteries are charged up to a full charged state. Accordingly, occurrence of micro shortcuts can be prevented because lithium does not deposit, and the battery pack can have a long life because lowering of capacity and output is prevented due to that the deterioration of the active material is prevented.

Further, in order to achieve the above object, a second aspect of the present invention is directed to an electric vehicle according to claim 7 where at least one battery pack, in which a plurality of lithium secondary batteries where a negative electrode lithium amount capable of being occluded by a negative electrode that a carbon material is used for a negative electrode active material is larger than a positive electrode lithium amount capable of being discharged by a positive electrode that a lithium transition metal complex oxide is used for a positive electrode active material, are connected in series, is mounted as a power source, wherein a difference in a state of charge (SOC) of each of the lithium secondary batteries is not greater than a percentage of a difference between a positive electrode charging capacity defined as a capacity of the positive electrode lithium amount in the positive electrode and a negative electrode charging capacity defined as a capacity of the negative electrode lithium amount in the negative electrode to a capacity of the lithium secondary battery.

According to the second aspect of the present invention, since all of the batteries that constitute the at least one battery pack and mounted on the electric vehicle satisfy the above inequality, the at least one battery pack exhibits the above effects stated in the first aspect. Accordingly, the electric vehicle which prevents lowering of driving force and a travel distance and which has high credibility on a long life can be obtained.

### BRIEF DESCRIPTION OF THE DRAWINGS

An embodiment of an electric vehicle to which the present invention is applied will be explained below with reference to the following drawings:

Fig. 1 is a perspective view illustratively showing an electric vehicle of an embodiment to which the present invention is applicable; and
Fig. 2 is a sectional view showing a cylindrical lithium ion battery which constitutes a battery pack mounted on the electric vehicle.

### DETAILED DESCRIPTION OF THE PREFERRED EMBODIMENTS

### (Battery Pack)

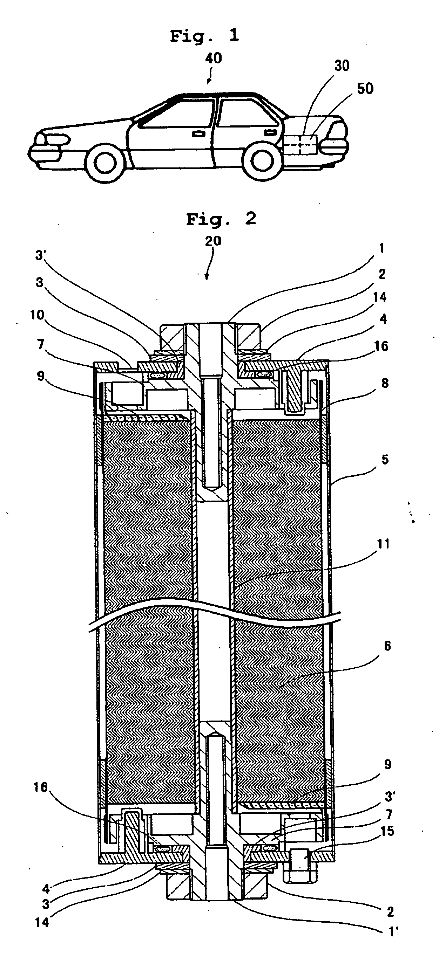

As shown in Fig. 1, a module battery 30 which is a power source is mounted on an electric vehicle 40. The module battery 30 is constituted by a plurality of (ex. four) battery packs 50 which are connected in series, and each of the battery packs 50 is constituted by a plurality of (ex. four) lithium ion batteries. Accordingly, 16 lithium ion batteries are mounted on the electric vehicle 40. Each of the lithium ion batteries is manufactured in the following manner.

### (Manufacture of Positive Electrode)

A lithium manganate (LiMn₂O₄) serving as a lithium transition metal complex oxide which can be released/occluded through charging/discharging was selected as a positive electrode active material. A lithiummanganate powder, a scale-shaped graphite (mean particle diameter: 5 micro meters) as a conductive material, and polyvinylidene fluoride as a binder are mixed at a proportion of 85: 10: 5 by weight, the resultant mixture is added and mixed with N-methyl-2-pyrrolidone as a dispersion solvent, thereby slurry is produced. The slurry is applied on both surfaces of an aluminum foil (a positive electrode collector) having a thickness of 20 micro meters. At this time, an unapplied portion having a width of 50 mm is left at one side edge along a longitudinal direction of the positive electrode. Thereafter, the positive electrode is dried, pressed and then cut, thereby a positive electrode having a width of a positive electrode active material mixture layer of 300 mm, a length of 6000 mm, a thickness (including the aluminum foil) of 230 micro meters is obtained. An applied amount after drying at the positive electrode active material mixture layer was set to 280 g/m². Anunappliedportion is notched and remaining portions thereof are formed as lead pieces. An interval or space between adjacent lead pieces was set to 20 mm, a width of each of lead pieces was set to 10 mm, and a width of the unapplied portion at the notched portion was set to 2 mm.

### (Manufacture of Negative Electrode)

90 weight parts of an amorphous carbon is added with 10 weight parts of polyvinylidene fluoride as a binder, and the resultant mixture is added with N-methyl-2-pyrrolidone as a dispersion solvent, and is mixed to produce slurry. The slurry is applied on both surfaces of a rolled copper foil (a negative electrode collector) having a thickness of 10 micro meters. At this time, an unapplied portion having a width of 50mm is left at one side edge along a longitudinal direction of the negative electrode. Thereafter, the negative electrode is dried, pressed and then cut, thereby a negative electrode having a width of a negative electrode active material mixture layer of 306 mm, a length of 6200 mm, a thickness (including the copper foil) of 140 micrometers is obtained. An applied amount after drying at the negative electrode active material mixture layer was set to 66 g/m². An unapplied portion is notched in the same manner as the positive electrode and remaining portions thereof are formed as lead pieces. An interval between adjacent lead pieces was set to 20 mm, a width of each of lead pieces was set to 10 mm, and a width of the unapplied portion at the notched portion was set to 2 mm.

### (Assembly of Battery)

As shown in Fig. 2, the positive and negative electrodes thus manufactured are wound with separators, each having a thickness of 40 micro meters, made of polyethylene, to manufacture a winding group 6. At this time, the lead pieces of the positive and negative electrodes are respectively positioned at both end faces opposed to each other with respect to the winding group 6. A diameter of the winding group 6 was set to 61 +-0.5 mm.

The lead pieces 9 extending from the positive electrode are deformed and all the lead pieces 9 are gathered around a peripheral surface of a flange portion 7 which is spreading integrally from a periphery of a pole stud (positive electrode external terminal 1) positioned approximately on an extension line of the shaft core 11. After the lead pieces 9 are brought into contact with the flange portion 7, the lead pieces 9 and the peripheral surface of the flange portion 7 are connected and fixed to each other by ultrasonic welding. Connecting operation between a flange portion of a negative electrode external terminal 1' and the lead pieces 9 extending from the negative electrode is carried out in the same manner as the connecting operation between the positive electrode external terminal 1 and the lead pieces 9 extending from the positive electrode.

Then, insulating covering 8 is applied on to the entire peripheries of the peripheral surfaces of the flange portions 7 of the positive electrode external terminal 1 and the negative electrode external terminal 1'. The insulating covering 8 is also applied on to the entire peripheral surface of the winding group 6. An adhesive tape comprising a base member formed of polyimide and adhesive agent made of hexameta-acrylate and applied to one surface thereof is used for the insulating covering 8. This adhesive tape is wound many times from the peripheral surface of the flange portion 7 to the outer peripheral surface of the winding group 6, thereby forming the insulating covering 8, and then the winding group 6 is inserted into the battery container 5. The outer and inner diameters of the battery container 5 are respectively 67 mm and 66 mm.

Second ceramic washers 3' are respectively fitted on the pole studwhose distal end constitutes the positive electrode external terminal 1 and the pole stud whose distal end constitutes the negative electrode external terminal 1'. Each second ceramic washer 3' is made of alumina and has a portion abutting on a back face of a disk-shaped battery lid 4, the abutting portion having a thickness of 2 mm, an inner diameter of 16 mm and an outer diameter of 25 mm. Alumina-made first planer ceramic washers 3 are respectively placed on the battery lids 4, and the positive electrode external terminal 1 and the negative electrode external terminal 1' are respectively inserted into the first ceramic washers 3. Each first planer ceramic washer 3 has a thickness of 2 mm, an inner diameter of 16 mm and an outer diameter of 28 mm. Then, peripheral faces of the battery lids 4 are fitted to openings of the battery container 5 and the entire contacting portion between the lids 4 and the battery container 5 is laser-welded. At this time, the positive electrode external terminal 1 and the negative electrode external terminal 1' project outside the battery lids 4 through holes formed at centers of the battery lids 4. The ceramic washer 3 and a metal washer 14 which is smoother than the bottom face of a metal nut 2 are fitted on each of the positive electrode external terminal 1 and the negative electrode external terminal 1' in this order. A cleavage valve 10, which cleaves according to an increase in battery internal pressure, is equipped with the battery lids 4. The cleavage valve 10 is set to cleaving pressure of 1.3 to 1.8 MPa.

Next, the nut 2 is screwed to each of the positive electrode external terminal 1 and the negative electrode external terminal 1' to fasten and fix the battery lid 4 with the flange portion 7 through the second ceramic washer 3', the first ceramic washer 3 and the metal washer 14. At this time, a value of fastening torque was set to 6.8 Nm. Incidentally, the metal washer 14 was not rotated until the fastening work was completed. In this state, generating elements accommodated in the battery container 5 are shut off from the atmosphere through compression of each O-ring 16 made of rubber (EPDM) interposed between the back face of the battery lid 4 and the flange portion 7.

Thereafter, a non-aqueous electrolytic solution of 480 g is poured into the battery container 5 through liquid-filling opening 15 formed at another of the battery lids 4, and then the liquid-filling opening 15 is sealed so that assembling of the cylindrical lithium ion battery 20 is completed. Then, the battery is given the function as a battery by initial charging. Incidentally, the non-aqueous electrolytic solution is prepared previously by dissolving a lithium hexafluorophosphate (LiPF₆) of one mole/litter into a mixed solution where a volume ratio of ethylene carbonate, dimethyl carbonate and diethyl carbonate is 1:1:1.

Regarding the manufactured lithium ion battery 20, a difference between a lithium amount from which the positive electrode is capable of releasing (discharging) and a lithium amount to which the negative electrode is capable of occluding was calculated as a capacity, and then a percentage of the calculated capacity to a capacity of the lithium ion battery 20 was calculated. The calculated percentage was 6 %. Namely, in the lithium ion battery 20, a percentage of {absolute value of (positive electrode charging capacity - negative electrode charging capacity) / (capacity of lithium secondary battery)} is set to 6 % (hereinafter this percentage is called "the percentage").

### (Manufacture of Battery Pack and Module Battery)

Next, the battery pack 50 is manufactured by connecting thus manufactured four lithium ion batteries 20 (hereinafter, each lithium ion battery 20 is called "cell") in series. Further, the module battery 30 is manufactured by connecting four battery packs 50 in series.

### (Examples)

Next, Examples of battery packs and module batteries manufactured in accordance with the above embodiment will be explained. Battery packs and a module battery of Controls manufactured for making a comparison with Examples will also be described.

### (Example 1-1)

As shown in the following table 1, in Example 1-1, the battery pack was manufactured by four cells, each of which state of charge (hereinafter called "SOC") was adjusted to 100 %. The difference in SOC among the cells was 0 point. Incidentally, in Table 1, the SOC difference shows the maximum value of the difference in SOC among the cells.

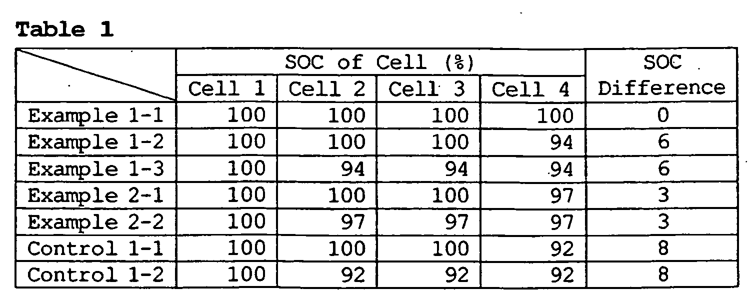

### (Example 1-2)

As shown in Table 1, in Example 1-2, the battery pack was constituted by three cells of which SOC was adjusted to 100 % and one cell of which SOC was adjusted to 94 %. The SOC difference among the cells was 6 points.

### (Example 1-3)

As shown in Table 1, in Example 1-3, the battery pack was constituted by one cell of which SOC was adjusted to 100 % and three cells of which SOC was adjusted to 94 %. The SOC difference among the cells was 6 points.

### (Example 2-1)

As shown in Table 1, in Example 2-1, the battery pack was constituted by three cells of which SOC was adjusted to 100 % and one cell of which SOC was adjusted to 97 %. The SOC difference among the cells was 3 points.

### (Example 2-2)

As shown in Table 1, in Example 2-2, the battery pack was constituted by one cell of which SOC was adjusted to 100 % and three cells of which SOC was adjusted to 97 %. The SOC difference among the cells was 3 points.

### (Control 1-1)

As shown in Table 1, in Control 1-1, the battery pack was constituted by three cells of which SOC was adjusted to 100 % and one cell of which SOC was adjusted to 92 %. The SOC difference among the cells was 8 points.

### (Control 1-2)

As shown in Table 1, in Control 1-2, the battery pack was constituted by one cell of which SOC was adjusted to 100 % and three cells of which SOC was adjusted to 92 %. The SOC difference among the cells was 8 points.

Next, as shown in Table 2, the module battery was manufactured by connecting the four battery packs in series. Incidentally, in Table 2, the SOC difference in each of the battery packs shows the maximumvalue of the difference in SOC among the cells which constitutes each of the battery packs, and the SOC difference in the whole shows the maximum value of the difference in SOC among the whole of 16 cells.

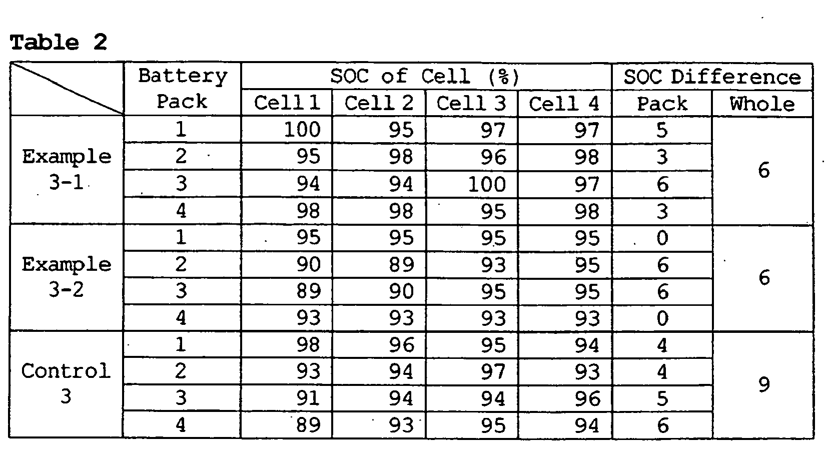

### (Examples 3-1, 3-2)

As shown in Table 2, in module batteries of Examples 3-1 and 3-2, the difference in SOC among the cells which constitute each of the battery packs 1 to 4 was adjusted to 6 points or less. The difference in SOC among the cells which constitute all of the module battery was also adjusted to 6 points.

### (Control 3)

As shown in Table 2, in a module battery of Control 3, the difference in SOC among the cells which constitute each of the battery packs 1 to 4 was adjusted to 6 points or less. However, the difference in SOC among the cells which constitute the module battery was adjusted so as to exceed 6 points (The SOC difference between the cell 1 of the battery pack 1 and the cell 1 of the battery pack 3 was 7 points, and the SOC difference between the cell 1 of the battery pack 1 and the cell 1 of the battery pack 4 was 9 points.)

### (Test 1)

Regarding the manufactured battery packs of Examples 1-1 to 2-2 and Controls 1-1 and 1-2, initial discharging capacities were measured after charging and discharging according to the following charging/discharging conditions 1 were carried out. Charging and discharging were repeated 100 times under the same charging/discharging conditions 1, and then the 100th discharging capacities were measured. In a case that each of the initial discharging capacities is 100, capacity ratios defined by a proportion (percentage) of the 100th discharging capacities to the initial discharging capacities were calculated respectively. The following table 3 shows the test results of the capacity ratios.

### <Charging/Discharging Conditions 1>

Discharging: 25A constant current; final voltage 11.2V; 45 +- 2 deg. C.; and cessation 20 minutes
Charging: 50A, 16.8V constant current and constant voltage; charging time 4 hours; 45 +- 2 deg. C.; and cessation 20 minutes

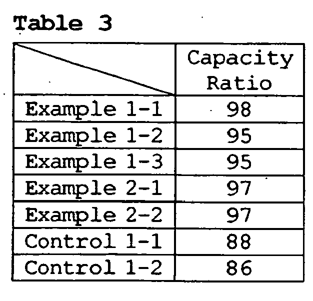

As shown in Table 3, the battery packs of Examples 1-1 to 2-2, the SOC differences among the cells which constitute the battery pack being not greater than the above defined percentage, demonstrated high 100th capacity ratios and maintained their capacities almost as much as the initial discharging capacities. On the other hand, the battery packs of Controls 1-1 and 1-2, the SOC differences among the cells exceeding the percentage, exhibited low capacity ratios. This is because, when the SOC difference exceeds the percentage, the cells connected in series tend to become overcharged and over-discharged states, thereby deterioration of the negative electrode active material begins and repetition of charging and discharging of the cells accelerates the deterioration. Accordingly, it is important that the SOC difference among the cells which constitute the battery pack does not exceed the percentage in order to prevent the battery pack from deterioration.

### (Test 2)

Regarding the manufactured module batteries of Examples 3-1, 3-2 and Control 3, initial discharging capacities were measured after charging and discharging according to the following charging/discharging conditions 2 were carried out. Assuming repetition of charging and traveling (discharging) when the module batteries are mounted on the electric vehicle, charging and discharging were repeated 200 times under the same charging/discharging conditions 2, and then the 200th discharging capacities were measured. In a case that each of the initial discharging capacities is 100, capacity ratios defined by a proportion (percentage) of the 200th discharging capacities to the initial discharging capacities were calculated respectively. The following table 4 shows the test results of the capacity ratios.

### <Charging/Discharging Conditions 2>

Discharging: 25A constant current; final voltage 44.8V; 30 +- 2 deg. C.; and cessation 5 minutes
Charging: 50A, 67.2V constant current and constant voltage; charging time 4 hours; 30 +- 2 deg. C.; and cessation 20 minutes

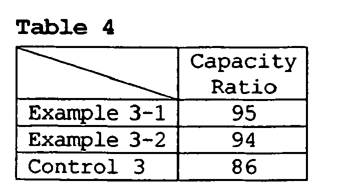

As shown in Table 4, the module batteries of Examples 3-1 and 3-2, the SOC differences among the cells which constitute each of the battery packs 1-4 being not greater than the above defined percentage, and the SOC differences among the cells which constitute all of the battery packs 1-4 being not greater than the above defined percentage, maintained high capacity ratios after repetition of charging and discharging of 200 times. To the contrast, the module battery of Control 3, the SOC differences among the cells which constitute each of the battery packs 1-4 being not greater than the above defined percentage, while the SOC differences of a part of the cells included in the whole battery packs 1-4 exceeding the above defined percentage, exhibited low capacity ratios and deterioration.

When a battery pack in which a plurality of cells having different SOCs are connected in series is charged, even if a cell having a high SOC reaches a full charge, a cell having a low SOC does not reach a full charge because of insufficiency of a charging amount. When the battery pack is further charged so that the cell having a low SOC reaches the full charge, the cell having a high SOC exceeds the full charge and lithium is oversupplied to its negative electrode. If the SOC difference exceeds the percentage, the negative electrode can not occlude the oversupplied lithium. This brings deposition of lithium, which causes micro shortcuts between the electrodes because the thin separators are damaged; thereby a part of the cells lowers the capacity and output, and at the same time, causes deterioration of the active material in the negative electrode. On the contrary, when the battery pack is discharged, if the cell having the high SOC is discharged down to a final voltage, the cell having the low SOC tends to become an over-discharged state, which causes deterioration of the active material. Repetition of charging and discharging of the battery pack accelerates performance drops and deterioration of a part of the cells, and a life of the battery pack as well as the module battery becomes shortened.

In the battery pack of the above embodiment in which the four lithium ion batteries 20 are connected in series, the percentage of the difference between the positive electrode charging capacity and the negative electrode charging capacity to the capacity of the lithium ion battery 20 was set to 6 %, and the SOC difference (which is expressed by point) among the lithium ion batteries 20 was set to be not greater than the percentage. Even if the cell(s) having (a) high SOC(s) is/are overcharged, or even if the cell(s) having (a) low SOC (s) is /are over-discharged, because the negative electrode charging capacity is larger than the positive electrode charging capacity exceeding the SOC difference(s), performance drops and deterioration of the active material can be prevented. Accordingly, since a life of each of the cells is not shortened, each of the battery packs has a long life.

Further, in the module battery of the present embodiment in which the four battery packs are connected in series, the SOC differences among the cells which constitute each of the battery packs are set to be not greater than the percentage, and the SOC differences among the cells which constitute the whole battery packs are also set to be not greater than the percentage. Accordingly, even if the cell(s) having (a) high SOC(s) is/are overcharged, or even if the cell(s) having (a) low SOC(s) is/are over-discharged, because the negative electrode charging capacity is larger than the positive electrode charging capacity exceeding the SOC difference (s), performance drops and deterioration of the active material can be prevented, thereby the module battery has a long life. Therefore, in the electric vehicle on which the module battery is mounted as a power source, since the module battery can maintain high capacity and output for a long period of time, the vehicle can be prevented from lowering of driving force and a traveling distance for a long time.

Incidentally, in the above embodiment, the battery pack in which the four cells are connected in series and the module battery in which the four battery packs are connected in series assuming that the module battery is mounted on the electric vehicle were explained, however, the present invention is not limited to the same. For example, the number of the cells which constitute the battery pack or the number of the battery packs which constitute the module battery may be changed, and the cells may be connected not only in series but also in series and parallel. Such connection enables the battery pack or the module battery to have a high output as well as a high capacity.

Further, in the above embodiment, the large-sized secondary batteries used for a power source for the electric vehicle was explained, however, the present invention is not limited to the sizes of the batteries and the battery capacities described in the embodiment. Furthermore, as a structure to which the present invention is applicable, other than the structure where the positive and negative electrode external terminals push with each other described in the embodiment, a structure where the battery lid is fitted to the above cylindrical container (can) having a bottom in a sealing manner through caulking can be employed, and as an electrode group, other than the wound type, for example, a laminated or layered type electrode group may be employed. Moreover, the present invention is applicable, for example, to a shape with a rectangular configuration other than the illustrated cylindrical configuration. Since the batteries used for a power source for an electric vehicle are requested to have characteristics of relatively high capacity and high output, batteries to which the present invention is applied is expected to exhibit remarkable effects.

Furthermore, in the above embodiment, the example that the percentage was set to 6 %, however, the present invention is not restricted to this example. In other words, the percentage may be set according to the kinds of active materials and amounts thereof for the positive and negative electrodes. If the percentage is set larger by increasing the lithium amount that the negative electrode is capable of occluding, the energy density of the lithium secondary battery drops due to an increase in the capacity of the negative electrode. On the contrary, if the percentage is set smaller, the SOC difference must be smaller in order to secure the life of the lithium secondary battery. Accordingly, it is preferable that the percentage is set according to the energy density and the SOC difference.

Moreover, in the above embodiment, the lithium manganate was used for the positive electrode, the amorphous carbon was used for the negative electrode, and the solution prepared by dissolving lithium hexafluorophosphate at 1 mole/liter into the mixed solution of ethylene carbonate, dimethyl carbonate and diethyl carbonate at the volume ratio of 1: 1: 1 was used as the electrolytic solution. However, the present invention is not limited to these materials and solution. Also, as the conductive material and the binder, ones which are used ordinarily can be used in this invention.

As a positive electrode active material other than the above-mentioned embodiment, a lithium transition metal complex oxide such as lithium cobaltate, lithium nickelate, and a lithium complex oxide of manganese, cobalt, or nickel canbe used. Further, a material where a portion of lithium or a transition metal element is substituted by or doped with another metal can be used as the active material of the present invention. Furthermore, the present invention is not limited to the crystal structure of the positive electrode active material, accordingly, both a spinel crystal structure and a layered crystal structure may be employed for the positive electrode active material.

Regarding a negative electrode active material other than the above embodiment, for example, natural graphite, various artificial graphite materials, carbon material such as cokes, or the like may be used. The particle shapes of these materials may include scale shape, sphere shape, fiber shape, massive shape, and the like, and the active material used in this invention is not limited to the specific shape illustrated in the embodiment.

Furthermore, as the non-aqueous electrolytic solution, an electrolytic solution prepared by using an ordinary lithium salt as an electrolyte to dissolve the lithium salt in an organic solvent can be used, where a lithium salt and organic solvent to be used are not limited to specificmaterials. For example, as the electrolyte, LiClO₄, LiAsF₆, LiPF₆, LiBF₄, LiB(C₆H₅)₄, CH₃SO₃Li, CF₃SO₃Li or the like, or mixture thereof can be used. As the non-aqueous electrolytic solution organic solvent, polypropylene carbonate, ethylene carbonate, 1,2-dimethxy ethane, 1,2-diethxy ethane, gamma -butyrolactone, tetrahydofuran, 1,3-dioxolane, 4-mehyl-1, 3-dioxolane, diethyl ether, sulfolane, methyl-sulfolane, acetonitrile, propionitrile, or the like, or mixed solvent of at least two kinds thereof can be used, and the composition ratio of mixture is not limited to any specific range.

Moreover, as a binder other than the above-mentioned embodiment which can be used, there are polymers such as polytetrafluoroethylene (PTFE), polyethylene, polystyrene, polybutadiene, isobutylene-isopren rubber, nitrile rubber, styrene-butadiene rubber, polysulfide rubber, cellulose nitrate, cyanoethyl cellulose, polyvinyl alcohol, various latex, acrylonitrile, vinyl fluoride, vinylidene fluoride, propylene fluoride, chloroprene fluoride and the like, and mixture thereof.

Further, in the above embodiment, the separators made of polyethylene were shown, however, the present invention is not confined to the same. Polyolefine system material such as polypropylene and the like may be used for the separators. Moreover, a combination of a plurality of materials may be employed. For example, polyethylene and polypropylene may be laminated to form the separator.

Furthermore, in the embodiment, the adhesive tape comprising the base material of polyimide and the adhesive agent of hexametha-acrylate applied to one side face thereof was used as the insulating covering 8. This invention is not limited to this adhesive tape. For example, an adhesive tape comprising a base material of polyolefin such as polypropylene, polyethylene or the like and acrylyic system adhesive agent such as hexametha-acrylate, butyl-acrylate or the like applied to one side face or both side faces of the base material, or a tape without applying adhesive agent thereon and comprising polyolefin, polyimide or the like also may be used preferably.

Lastly, since the present invention is to provide the battery pack which can prevent performance deterioration and which has a long life, and the electric vehicle which can prevent lowering of driving force and a travel distance by mounting the battery pack thereof, and contributes to manufacturing and marketing of battery packs and electric vehicles, the present invention has an industrial applicability.

## Claims

1. A battery pack in which a plurality of lithium secondary batteries are connected in series, each of the secondary batteries having a negative electrode in which a carbon material is used as a negative electrode active material and a positive electrode in which a lithium transition metal complex oxide is used as a positive electrode active material,
wherein a lithium amount of the negative electrode capable of being occluded is set larger than a lithium amount of the positive electrode capable of being discharged,
and wherein a percentage of a difference between a negative electrode charging capacity defined as a capacity of the lithium amount of the negative electrode and a positive electrode charging capacity defined as a capacity of the lithium amount of the positive electrode to a capacity of the lithium secondary battery is set so as to be greater or equal than a difference in a state of charge (SOC) of each of the lithium secondary batteries defined as a maximum SOC difference among the plurality of lithium secondary batteries when the plurality of lithium secondary batteries are charged and discharged.

2. A battery pack according to claim 1, wherein the percentage is set to be not less than 6%.

3. A battery pack according to claim 1, wherein the difference in the SOC of each of the lithium secondary batteries is not greater than 6 percentage points.

4. A battery pack according to claim 1, wherein a crystal structure of the lithium transition metal complex oxide is a spinel structure.

5. A battery pack according to claim 1, wherein a crystal structure of the lithium transition metal complex oxide is a layered structure.

6. A battery pack according to claim 1, wherein the carbon material is an amorphous carbon.

7. An electric vehicle where at least one battery pack, in which a plurality of lithium secondary batteries are connected in series, each of the secondary batteries having a negative electrode in which a carbon material is used as a negative electrode active material and a positive electrode in which a lithium transition metal complex oxide is used as a positive electrode active material, is mounted as a power source,
wherein a lithium amount of the negative electrode capable of being occluded is set larger than a lithium amount of the positive electrode capable of being discharged,
and wherein a percentage of a difference between a negative electrode charging capacity defined as a capacity of the lithium amount of the negative electrode and a positive electrode charging capacity defined as a capacity of the lithium amount of the positive electrode to a capacity of the lithium secondary battery is set so as to be greater or equal than a difference in a state of charge (SOC) of each of the lithium secondary batteries defined as a maximum SOC difference among the plurality of lithium secondary batteries when the plurality of lithium secondary batteries are charged and discharged.

8. An electric vehicle according to claim 7, wherein the percentage is set to be not less than 6%.

9. An electric vehicle according to claim 7, wherein the difference in the SOC of each of the lithium secondary batteries which constitutes the battery pack is not greater than 6 percentage point.

10. An electric vehicle according to claim 7, wherein a crystal structure of the lithium transition metal complex oxide is a spinel structure.

11. An electric vehicle according to claim 7, wherein a crystal structure of the lithium transition metal complex oxide is a layered structure.

12. An electric vehicle according to claim 7, wherein the carbon material is an amorphous carbon.

## Patentansprüche

1. Ein Batteriepack, in welchem eine Mehrzahl von Lithium-Sekundärbatterien seriell verbunden sind, wobei jede der Sekundärbatterien aufweist eine negative Elektrode, bei welcher ein Kohlenstoffmaterial als aktives Material der negativen Elektrode verwendet wird, und eine positive Elektrode, bei welcher ein Lithium-Übergangsmetallkomplexoxid als ein aktives Material der positiven Elektrode verwendet wird,
wobei eine Lithium-Menge der negativen Elektrode, die okkludiert werden kann, größer als eine Lithium-Menge der positiven Elektrode, die entladen werden kann, festgesetzt ist, und
wobei ein prozentuales Verhältnis von einer Differenz zwischen einer Negativ-Elektrode-Ladekapazität, die als eine Kapazität der Lithium-Menge der negativen Elektrode definiert ist, und einer Positiv-Elektrode-Ladekapazität, die als eine Kapazität der Lithium-Menge der positiven Elektrode definiert ist, zu einer Kapazität der Lithium-Sekundärbatterie so festgesetzt ist, dass es größer als oder gleich wie eine Differenz in einem Ladezustand (SOC) von jeder der Lithium-Sekundärbatterien ist, die als eine maximale SOC-Differenz unter der Mehrzahl der Lithium-Sekundärbatterien definiert ist, wenn die Mehrzahl der Lithium-Sekundärbatterien geladen und entladen wird.

2. Ein Batteriepack nach Anspruch 1, wobei das prozentuale Verhältnis so festgesetzt ist, dass es nicht weniger als 6% beträgt.

3. Ein Batteriepack nach Anspruch 1, wobei die Differenz im SOC von jeder der Lithium-Sekundärbatterien nicht größer ist als 6 Prozentpunkte.

4. Ein Batteriepack nach Anspruch 1, wobei eine Kristallstruktur des Lithium-Übergangsmetallkomplexoxids eine Spinellstruktur ist.

5. Ein Batteriepack nach Anspruch 1, wobei eine Kristallstruktur des Lithium-Übergangsmetallkomplexoxids eine Schichtstruktur ist.

6. Ein Batteriepack nach Anspruch 1, wobei das Kohlenstoffmaterial ein amorpher Kohlenstoff ist.

7. Ein Elektrofahrzeug, bei welchem zumindest ein Batteriepack, in welchem eine Mehrzahl von Lithium-Sekundärbatterien seriell verbunden sind, wobei jede der Sekundärbatterien aufweist eine negative Elektrode, bei welcher ein Kohlenstoffmaterial als aktives Material der negativen Elektrode verwendet wird, und eine positive Elektrode, bei welcher ein Lithium-Übergangsmetallkomplexoxid als ein aktives Material der positiven Elektrode verwendet wird, als eine Kraftquelle montiert ist,
wobei eine Lithium-Menge der negativen Elektrode, die okkludiert werden kann, größer als eine Lithium-Menge der positiven Elektrode, die entladen werden kann, festgesetzt ist, und
wobei ein prozentuales Verhältnis von einer Differenz zwischen einer Negativ-Elektrode-Ladekapazität, die als eine Kapazität der Lithium-Menge der negativen Elektrode definiert ist, und einer Positiv-Elektrode-Ladekapazität, die als eine Kapazität der Lithium-Menge der positiven Elektrode definiert ist, zu einer Kapazität der Lithium-Sekundärbatterie so festgesetzt ist, dass es größer als oder gleich wie eine Differenz in einem Ladezustand (SOC) von jeder der Lithium-Sekundärbatterien ist, die als eine maximale SOC-Differenz unter der Mehrzahl der Lithium-Sekundärbatterien definiert ist, wenn die Mehrzahl der Lithium-Sekundärbatterien geladen und entladen wird.

8. Ein Elektrofahrzeug nach Anspruch 7, wobei das prozentuale Verhältnis so festgesetzt ist, dass es nicht weniger als 6% beträgt.

9. Ein Elektrofahrzeug nach Anspruch 7, wobei die Differenz im SOC von jeder der Lithium-Sekundärbatterien, die das Batteriepack bilden, nicht größer ist als 6 Prozentpunkte.

10. Ein Elektrofahrzeug nach Anspruch 7, wobei eine Kristallstruktur des Lithium-Übergangsmetallkomplexoxids eine Spinellstruktur ist.

11. Ein Elektrofahrzeug nach Anspruch 7, wobei eine Kristallstruktur des Lithium-Übergangsmetallkomplexoxids eine Schichtstruktur ist.

12. Ein Elektrofahrzeug nach Anspruch 7, wobei das Kohlenstoffmaterial ein amorpher Kohlenstoff ist.

## Revendications

1. Bloc de batteries dans lequel une pluralité de batteries rechargeables au lithium sont connectées en série, chacune des batteries rechargeables présentant une électrode négative dans laquelle un matériau de carbone est utilisé en tant que matériau actif d'électrode négative, et une électrode positive dans laquelle un oxyde complexe de métal de transition lithié est utilisé en tant que matériau actif d'électrode positive ;
dans lequel la quantité de lithium de l'électrode négative pouvant être occluse est fixée plus grande que la quantité de lithium de l'électrode positive pouvant être déchargée ;
et dans lequel le pourcentage de la différence entre la capacité de charge de l'électrode négative définie comme étant la capacité de la quantité de lithium de l'électrode négative, et la capacité de charge de l'électrode positive définie comme étant la capacité de la quantité de lithium de l'électrode positive sur la capacité de la batterie rechargeable au lithium, est fixé supérieur ou égal à la différence dans un état de charge (SOC) de chacune des batteries rechargeables au lithium définie comme étant la différence SOC maximum parmi la pluralité de batteries rechargeables au lithium, lorsque la pluralité de batteries rechargeables au lithium sont chargées et déchargées.

2. Bloc de batteries selon la revendication 1, dans lequel le pourcentage est fixé comme n'étant pas inférieur à 6 %.

3. Bloc de batteries selon la revendication 1, dans lequel la différence dans le SOC de chacune des batteries rechargeables au lithium n'est pas supérieure à 6 points de pourcentage.

4. Bloc de batteries selon la revendication 1, dans lequel la structure cristalline de l'oxyde complexe de métal de transition lithié est une structure de spinelle.

5. Bloc de batteries selon la revendication 1, dans lequel la structure cristalline de l'oxyde complexe de métal de transition lithié est une structure stratifiée.

6. Bloc de batteries selon la revendication 1, dans lequel le matériau de carbone est un carbone amorphe.

7. Véhicule électrique dans lequel est monté, en tant que source d'alimentation, au moins un bloc de batteries dans lequel une pluralité de batteries rechargeables au lithium sont connectées en série, chacune des batteries rechargeables présentant une électrode négative dans laquelle un matériau de carbone est utilisé en tant que matériau actif d'électrode négative, et une électrode positive dans laquelle un oxyde complexe de métal de transition lithié est utilisé en tant que matériau actif d'électrode positive ;
dans lequel la quantité de lithium de l'électrode négative pouvant être occluse est fixée plus grande que la quantité de lithium de l'électrode positive pouvant être déchargée ;
et dans lequel le pourcentage de la différence entre la capacité de charge de l'électrode négative définie comme étant la capacité de la quantité de lithium de l'électrode négative, et la capacité de charge de l'électrode positive définie comme étant la capacité de la quantité de lithium de l'électrode positive sur la capacité de la batterie rechargeable au lithium, est fixé supérieur ou égal à la différence dans un état de charge (SOC) de chacune des batteries rechargeables au lithium définie comme étant la différence SOC maximum parmi la pluralité de batteries rechargeables au lithium, lorsque la pluralité de batteries rechargeables au lithium sont chargées et déchargées.

8. Véhicule électrique selon la revendication 7, dans lequel le pourcentage est fixé comme n'étant pas inférieur à 6 %.

9. Véhicule électrique selon la revendication 7, dans lequel la différence dans le SOC de chacune des batteries rechargeables au lithium qui constituent le bloc de batteries, n'est pas supérieure à 6 points de pourcentage.

10. Véhicule électrique selon la revendication 7, dans lequel la structure cristalline de l'oxyde complexe de métal de transition lithié est une structure de spinelle.

11. Véhicule électrique selon la revendication 7, dans lequel la structure cristalline de l'oxyde complexe de métal de transition lithié est une structure stratifiée.

12. Véhicule électrique selon la revendication 7, dans lequel le matériau de carbone est un carbone amorphe.
